# EUROPEAN PATENT APPLICATION

(11) **EP 2 835 497 A2**
(43) Date of publication of application: **11.02.2015**
(21) Application number: 14179529.4
(22) Date of filing: 01.08.2014
(51) Int. Cl.: F01D 5/00, B23P 6/00, F01D 25/28, F01D 25/24

(54) **Remote turbine component replacement apparatus and method of remotely replacing a turbine component**

(30) Priority: 07.08.2013 US 201313961339
(71) Applicant: GENERAL ELECTRIC COMPANY, Schenectady, NY 12345 (US)
(72) Inventor: Spanos, Charles Vaughan, Greenville, SC South Carolina 29615-4614 (US); Herbold, John William, Greenville, SC South Carolina 29615-4614 (US); Schultz, John Lovendahl, Greenville, SC South Carolina 29615-4614 (US)
(74) Representative: Illingworth-Law, William Illingworth

(57) **Abstract**

A remote turbine component replacement apparatus 50 for a turbine assembly includes an arm 54 having a first end 56 and a second end 58, the first end 56 configured to be positioned at a user accessible region 44 and the second end 58 configured to extend to a remote location 42 of the turbine assembly, the remote location 42 in close proximity with a turbine material zone to be removed. Also included is a base portion 60 proximate the second end 58, the base portion 60 configured to engage a turbine component located at the remote location 42. Further included is a material removal tool 72 disposed proximate the base portion 60. Yet further included is a debris removal component 78 disposed proximate the base portion 60.

## Description

The subject matter disclosed herein relates to turbine assemblies and, more particularly, to a remote turbine component replacement apparatus for use with such turbine assemblies, as well as a method of remotely removing material.

Numerous machines and structures include difficult to access regions that may require service, monitoring or the like. An example of such structure is a turbine assembly that includes several regions that may be difficult or impossible for a human being to reside within or access. Such regions pose service and/or monitoring challenges that require costly and time-consuming efforts. Certain smaller turbine assemblies require removal of large objects to provide the necessary access to perform the service and monitoring of regions. An outer casing is an example of a large object that may require removal and such an effort may include removal of all ducting enclosure components, turbine case piping, instrumentation, and hardware, thereby leading to substantial outage time durations. In one example, 36 to 60 hours of total outage time has been observed. Such an outage may lead to monetary loss and overall customer dissatisfaction.

According to one aspect of the invention, a remote turbine component replacement apparatus for a turbine assembly includes an arm having a first end and a second end, the first end configured to be positioned at a user accessible region and the second end configured to extend to a remote location of the turbine assembly, the remote location in close proximity with a turbine material zone to be removed. Also included is a base portion proximate the second end, the base portion configured to engage a turbine component located at the remote location. Further included is a material removal tool disposed proximate the base portion. Yet further included is a debris removal component disposed proximate the base portion.

According to another aspect of the invention, a method of remotely removing material from a turbine assembly is provided. The method includes extending an arm of a remote turbine component replacement apparatus to a remote location of the turbine assembly in close proximity with a turbine component. The method also includes removing material from a material removal zone with a material removal tool located proximate a base portion of the remote turbine component replacement apparatus, the base portion configured to be engaged with the turbine component at the remote location of the turbine assembly. The method further includes removing debris generated during removal of material with a debris removal component located proximate the base portion.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a turbine assembly;
FIG. 2 is a perspective view of a remote turbine component replacement apparatus;
FIG. 3 is an enlarged view of section III of FIG. 2, illustrating a portion of the remote turbine component replacement apparatus;
FIG. 4 is a perspective view of the remote turbine component replacement apparatus with a first socket for installing a bolt;
FIG. 5 is a perspective view of the remote turbine component replacement apparatus with a second socket for installing a washer;
FIG. 6 is a perspective view of the second socket; and
FIG. 7 is a flow diagram illustrating a method of remotely removing material from the turbine assembly.

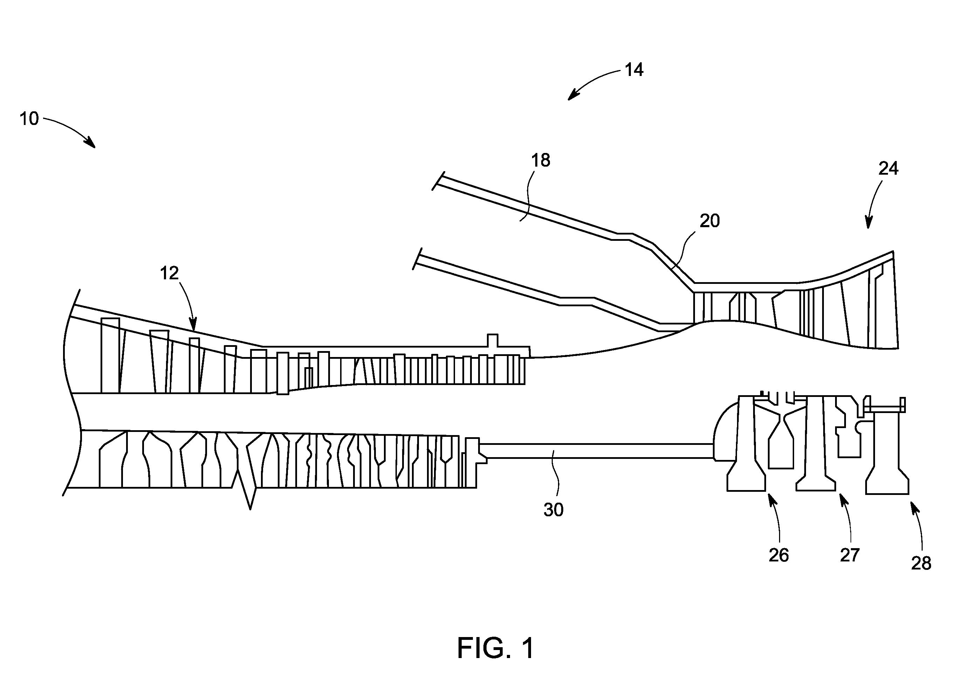

The detailed description explains embodiments of the invention, together with advantages and features, by way of example with reference to the drawings. Referring to FIG. 1, a turbine assembly constructed in accordance with an exemplary embodiment of the invention is schematically illustrated. The turbine assembly illustrated comprises a gas turbine engine 10, but it is to be appreciated that embodiments described herein may be employed in alternative assemblies or structures. For purposes of illustration and discussion, the gas turbine engine 10 is illustrated and described herein.

The gas turbine engine 10 includes a compressor section 12 and a plurality of combustor assemblies arranged in a can annular array, one of which is indicated at 14 and includes a combustion section 18. The compressor 12 compresses inlet air, which is transported to the combustor section 18 and mixed with fuel to form a fuel/air mixture. This fuel/air mixture is then combusted within the combustor section to produce a main flow of working fluid. The working fluid is directed to flow as a main flow toward a transition piece 20. Upon reaching the transition piece 20, the main flow of the working fluid is directed to flow through the transition piece 20 and into a turbine section 24. Within the turbine section 24, the working fluid may be expanded for power generation operations. The turbine section 24 includes a plurality of stages 26-28 that are operationally connected to the compressor section 12 through a rotor 30.

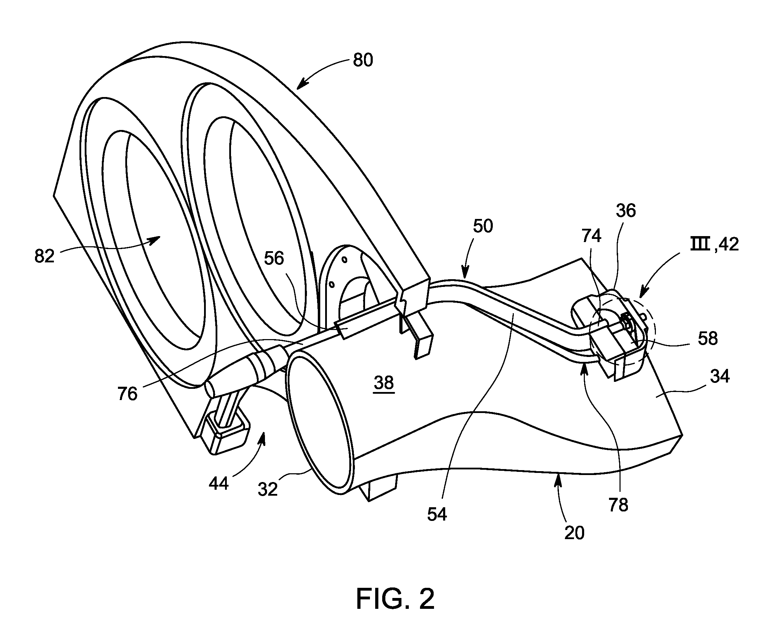

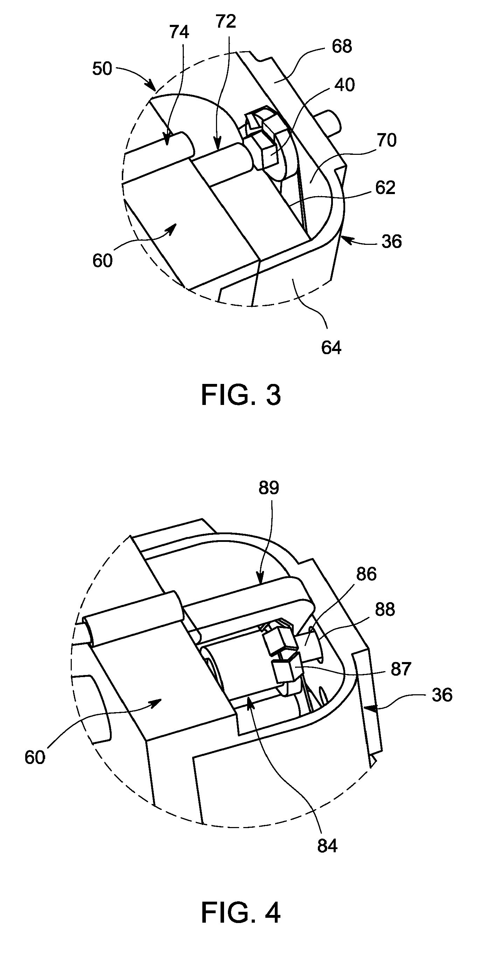

Referring to FIGS. 2 and 3, the transition piece 20 extends from a forward region 32 to an aft region 34 and is supported by, and operatively coupled to, various support structures. The transition piece 20 is at least partially supported with an aft mount bracket 36 that is located at the aft region 34 of the transition piece 20 along an outer surface 38. The aft mount bracket 36 is configured to have a mechanical fastener 40, such as a bolt, pass through the aft mount bracket 36 to engage a structural member, such as a mounting member of the turbine section 24. In one embodiment, the mounting member comprises a stage one nozzle structure. The aft mount bracket 36 includes a wall-like structure that extends away from the outer surface 38 of the transition piece 20 and may be integrally formed with the transition piece 20 or operatively coupled thereto.

As described above, the transition piece 20 extends between the combustion section 18 and the turbine section 24. The transition piece 20 is disposed at an internal location, referred to herein as a remote location 42, relative to the outer casing, such as a compressor discharge casing (CDC). In certain turbine assemblies, the aft mount bracket 36 is difficult, if not impossible, to access from a location external to the outer casing, the external location referred to herein as a user accessible region 44.

To avoid removal of the outer casing, a remote turbine component replacement apparatus 50 is employed to reach the remote location 42. The remote turbine component replacement apparatus 50 is well-suited for manual hand operation by a human user, but it is contemplated that a control system may control and operate the remote turbine component replacement apparatus 50. The remote turbine component replacement apparatus 50 is used to reach the remote location 42 from the user accessible region 44. An arm 54 that is typically a substantially rigid member extends from a first end 56 to a second end 58. The arm 54 is long enough to result in the first end 56 extending out of the outer casing to the user accessible region 44 when the second end 58 is extended to the aft region 34. More particularly, the first end 56 extends to the user accessible region 44 when the second end 58 of the arm 54 is in contact with the aft mount bracket 36. In this way, the user is able to remain situated away from the aft region 34 of the transition piece 20, thereby alleviating the need to remove the outer casing to remove the mechanical fastener 40 from the aft mount bracket 36 to facilitate removal of the transition piece 20 from the overall gas turbine engine 10.

The second end 58 comprises a base portion 60 that is configured to engage the aft mount bracket 36. The base portion 60 may be formed of various geometries, but an aft side 62 of the base portion 60 comprises a substantially corresponding geometry to that of the aft mount bracket 36. In one embodiment, the aft mount bracket 36 includes side walls 64 which may transition from an aft wall 68 with a fillet. The aft side 62 fittingly engages a forward face 70 of the aft mount bracket 36 to provide proper overall positioning of the remote turbine component replacement apparatus 50. Proper positioning ensures alignment for multiple operation components of the remote turbine component replacement apparatus 50, as will be described in detail below. Additionally, proper engagement with the side walls 64 reduces the likelihood of twisting of the remote turbine component replacement apparatus 50 during operation.

The base portion 60 is configured to support and house multiple components. A material removal tool 72 is disposed proximate the base portion 60 and includes a centerline that is aligned with the centerline of the mechanical fastener 40 upon proper positioning of the base portion 60, relative to the aft mount bracket 36. Proper positioning and operational monitoring is facilitated by inclusion of a borescope 74 disposed proximate the base portion 60. Although illustrated with a physical cable extending from the borescope 74 toward the first end 56 of the arm 54, a wireless signal may be transmitted from the borescope 74. In either event, a viewing region of the remote location 42 is provided to a user of the remote turbine component replacement apparatus 50. Multiple embodiments of the material removal tool 72 are contemplated and include any material removal techniques known in the art. For example, tools configured for drilling, milling, machining, and/or cutting material are suitable, such as a drill, die grinder, cutting disc or milling head. In one embodiment, the material removal tool 72 is a 0.625" drill. In an alternative embodiment, a hydraulic wrench used in conjunction with a pin filled socket may be employed to engage the material to be removed, including washer locking tabs, and imposes a torsional force on the material, thereby shearing material from the component. The preceding list of embodiments is merely illustrative and is not limiting. Additionally, a combination of the noted tools may be employed in certain embodiments. Regardless of the precise tool employed, the material removal tool 72 is employed to remove material from a turbine material zone. Several components or regions of the turbine assembly may comprise the turbine material zone to have material removed therefrom. In an exemplary embodiment, the mechanical fastener 40 is the material to be removed in a destructive manner. The material removal tool 72 operates to destroy the mechanical fastener 40 by removing material in a debris generating fashion. The material removal tool 72 is controlled by a user situated at the user accessible region 44. A tool cable 76 extending toward the first end 56 of the arm 54 is in operative communication with a control accessible to the user.

In operation, the material removal tool 72 removes material from the turbine material zone, such as the mechanical fastener 40, thereby generating debris. A debris removal component 78 is disposed proximate, or partially housed within, the base portion 60. In one embodiment, the debris removal component 78 is a vacuum that transports the debris generated during the removal process from the second end 58 toward the first end 56 of the arm 54. Once the mechanical fastener 40, or fasteners depending on the particular application, is removed, the transition piece 20 may be removed from the gas turbine engine 10. Typically multiple transition pieces are circumferentially arranged and the above-described process may be repeated for the remaining transition pieces with use of the remote turbine component replacement apparatus 50.

In an embodiment of the remote turbine component replacement apparatus 50, a forward support 80 is included to engage the forward region 32 of the transition piece 20. The forward support 80 comprises a plurality of apertures 82 configured to slide over combustion cans and any associated liners, to a location proximate the forward region 32 of the transition piece 20. The forward support 80 may be formed of a ferromagnetic material that magnetically attracts to the outer surface 38 of the transition piece 20, thereby providing a stabilizing force during operation of the remote turbine component replacement apparatus 50.

According to another aspect of the embodiments described herein, and with reference to FIG. 4, the remote turbine component replacement apparatus 50 is configured to install fastening bolts to secure a turbine component, such as the transition piece 20, to the aft mount bracket 36. To facilitate bolt installation, a first socket 84 (also referred to herein as a material removal socket) is secured to the remote turbine component replacement apparatus 50 proximate the base portion 60 of the arm 54. The first socket 84 is removably coupled to the base portion 60. The arm 54 is employed to locate of the aft mount bracket 36 to align a bolt 86 and a locking tab washer 87 to a hole 88 of the aft mount bracket 36, via a square drive and the first socket 84. The bolt 86 is magnetically engaged with the first socket 84. A spring loaded chamfered arm 89 holds the bolt 86 and the locking tab washer 87 in place in the first socket 84 prior to hole engagement. Additionally, magnetic attraction may facilitate retention of the components to the first socket 84. The first socket 84 is then rotated to tighten and secure the bolt 86 within the hole 88.

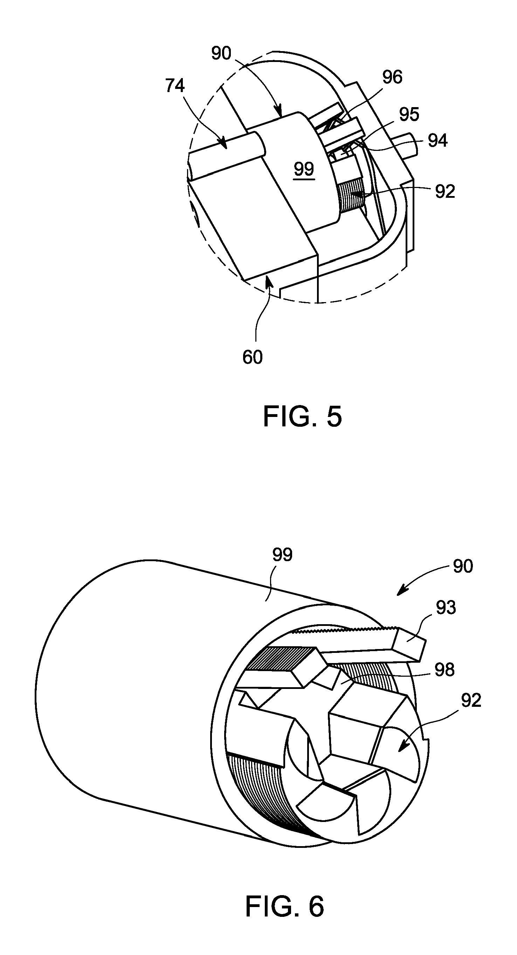

Referring to FIGS. 5 and 6, a second socket 90 (also referred to herein as an installation socket) is also configured to be coupled to the arm 54 proximate the base portion 60 subsequent to removal of the first socket 84. The second socket 90 self-aligns, via a scalloped section 92 of the second socket 90, to flats 94 opposite a plurality of tabs 96 of the locking tab washer 87. The scalloped section 92 is configured to rotate until their respective flats 98 contact the flats 94. An outer sleeve 99 of the second socket 90 threads axially along the scalloped section 92. This axial movement causes at least one, but typically a plurality of levers 93 to compress on the plurality of tabs 96 of the locking tab washer 87, thereby properly installing the plurality of tabs 96 to a head portion 95 of the bolt 86. As with the material removal process described in detail above, the borescope 74 may be employed to visually monitor the bolt installation process.

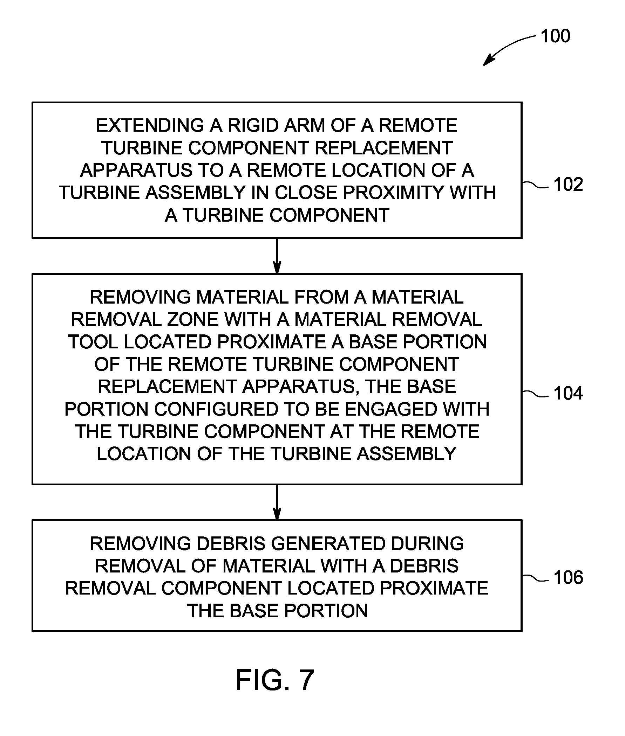

As illustrated in the flow diagram of FIG. 7, and with reference to FIGS. 1-6, a method of remotely replacing a turbine component from a turbine assembly 100 is also provided. The gas turbine engine 10 and the remote turbine component replacement apparatus 50 have been previously described and specific structural components need not be described in further detail. The method of remotely removing material from a turbine assembly 100 includes extending an arm of a remote turbine component replacement apparatus to a remote location of the turbine assembly in close proximity with a turbine component 102. The material is removed from a material removal zone with a material removal tool located proximate a base portion of the remote turbine component replacement apparatus, the base portion configured to be engaged with the turbine component at the remote location of the turbine assembly 104. Debris generated during removal of material is removed with a debris removal component located proximate the base portion 106. The features associated with the method have been described in detail above and duplicative description is not provided.

In addition to the material removal process that facilitates removal of a turbine component, such as the transition piece 20, the method also may include installation of an inspected or new transition piece. The first socket 84 and the second socket 90 have been described in detail above. The method includes coupling the first socket 84 proximate the base portion 60 and engaging the bolt 86 to the first socket 84, such as with magnetic attraction, for example. The bolt 86 is located within the hole 88 and torqued into engagement with the hole 88 to secure the turbine component to the turbine assembly. Upon final torqueing, the first socket 84 is removed and the second socket 90 is coupled to the arm 54 proximate the base portion 60. The second socket 90 includes an alignment profile that corresponds to a geometry of the head portion 95 of the bolt, thereby facilitating alignment. The second socket 90 is rotated to engage a plurality of locking tabs 96 of a locking tab washer 87, with such rotation flattening the plurality of locking tabs 96 upon engagement of the plurality of the locking tabs 96 with at least one lever protruding from the second socket 90, wherein flattening the plurality of locking tabs 96 provides a retention force on the head portion 95 of the bolt 86.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A remote turbine component replacement apparatus comprising:
   an arm having a first end and a second end, the first end configured to be positioned at a user accessible region and the second end configured to extend to a remote location of the turbine assembly, the remote location in close proximity with a turbine material zone to be removed;
   a base portion proximate the second end, the base portion configured to engage a turbine component located at the remote location;
   a material removal tool disposed proximate the base portion; and
   a debris removal component disposed proximate the base portion.
2. The remote turbine component replacement apparatus of clause 1, further comprising a borescope disposed proximate the base portion and configured to provide a viewing region of the remote location.
3. The remote turbine component replacement apparatus of any preceding clause, wherein the debris removal component comprises a vacuum.
4. The remote turbine component replacement apparatus of any preceding clause, wherein the material removal tool is configured to do at least one of drill, mill and cut material from the turbine material zone.
5. The remote turbine component replacement apparatus of any preceding clause, wherein the material removal tool comprises a die grinding cutting disk.
6. The remote turbine component replacement apparatus of any preceding clause, wherein the material removal tool comprises a hydraulic wrench and a pin filled socket.
7. The remote turbine component replacement apparatus of any preceding clause, wherein the remote location is within an outer casing of the turbine assembly.
8. The remote turbine component replacement apparatus of any preceding clause, wherein the user accessible region is external to the outer casing.
9. The remote turbine component replacement apparatus of any preceding clause, wherein the turbine component comprises a transition piece.
10. The remote turbine component replacement apparatus of any preceding clause, wherein the remote location is an aft region of the transition piece.
11. The remote turbine component replacement apparatus of any preceding clause, wherein the turbine material zone comprises a mechanical fastener engaged with the transition piece.
12. The remote turbine component replacement apparatus of any preceding clause, wherein the mechanical fastener comprises at least one bolt engaging the transition piece to a turbine section component via an aft mount bracket of the transition piece.
13. The remote turbine replacement apparatus of any preceding clause, further comprising a material removal socket removably coupled proximate the base portion, the material removal socket configured to magnetically engage a bolt.
14. A remote turbine replacement apparatus comprising an installation socket removably coupled proximate the base portion, the installation socket comprising an alignment profile corresponding to a head portion of the bolt and at least one lever configured to flatten a plurality of locking tabs of a locking tab washer into engagement with the head portion of the bolt upon rotation of the installation socket.
15. A method of remotely replacing a turbine component from a turbine assembly comprising:
   extending an arm of a remote turbine component replacement apparatus to a remote location of the turbine assembly in close proximity with a turbine component;
   removing material from a material removal zone with a material removal tool located proximate a base portion of the remote turbine component replacement apparatus, the base portion configured to be engaged with the turbine component at the remote location of the turbine assembly; and
   removing debris generated during removal of material with a debris removal component located proximate the base portion.
16. The method of any preceding clause, wherein removing material comprises destroying a mechanical fastener.
17. The method of any preceding clause, wherein the mechanical fastener engages a transition piece to a turbine section component via an aft mount bracket of the transition piece.
18. The method of any preceding clause, wherein extending the arm to the remote location comprises extending the base portion to an internal location of an outer casing to a location proximate an aft region of a transition piece.
19. The method of any preceding clause, further comprising:
   coupling a material removal socket proximate the base portion;
   magnetically attaching a bolt to the material removal socket;
   locating the bolt within a hole;
   torqueing the bolt into engagement with the hole to secure the turbine component to the turbine assembly;
   remove the material removal socket;
   couple an installation socket to proximate the base portion;
   aligning an alignment profile of the installation socket to a corresponding geometry of a head portion of the bolt;
   rotating the installation socket to engage a plurality of locking tabs of a locking tab washer; and
   flattening the plurality of locking tabs upon engagement of the plurality of the locking tabs with at least one lever protruding from the installation socket, wherein flattening the plurality of locking tabs provides a retention force on the head portion of the bolt.
20. The method of any preceding clause, further comprising visually monitoring a viewing region proximate the remote location with a borescope disposed proximate the base portion of the remote turbine component replacement apparatus.

## Claims

1. A remote turbine component replacement apparatus (50) comprising:
an arm (54) having a first end (56) and a second end (58), the first end (56) configured to be positioned at a user accessible region (44) and the second end (58) configured to extend to a remote location (42) of the turbine assembly, the remote location (42) in close proximity with a turbine material zone to be removed;
a base portion (60) proximate the second end, the base portion (60) configured to engage a turbine component located at the remote location (42);
a material removal tool (72) disposed proximate the base portion (60); and
a debris removal component (78) disposed proximate the base portion (60).

2. The remote turbine component replacement apparatus of claim 1, further comprising a borescope (74) disposed proximate the base portion (60) and configured to provide a viewing region of the remote location (42).

3. The remote turbine component replacement apparatus of claim 1 or claim 2, wherein the debris removal component (78) comprises a vacuum.

4. The remote turbine component replacement apparatus of claim 1, 2 or 3, wherein at least one of:
the material removal tool (72) is configured to do at least one of drill, mill and cut material from the turbine material zone;
the material removal tool (72) comprises a die grinding cutting disk, and
the material removal tool (72) comprises a hydraulic wrench and a pin filled socket.

5. The remote turbine component replacement apparatus of any preceding claim, wherein the remote location (42) is within an outer casing of the turbine assembly.

6. The remote turbine component replacement apparatus of any preceding claim, wherein the user accessible region is external to the outer casing.

7. The remote turbine component replacement apparatus of any preceding claim, wherein the turbine component comprises a transition piece (20).

8. The remote turbine component replacement apparatus of claim 7, wherein the remote location (42) is an aft region of the transition piece (20).

9. The remote turbine component replacement apparatus of claim 7 or claim 8, wherein the turbine material zone comprises a mechanical fastener engaged with the transition piece (20), wherein, preferably, the mechanical fastener comprises at least one bolt engaging the transition piece to a turbine section component via an aft mount bracket of the transition piece (20).

10. The remote turbine replacement apparatus of any preceding claim, further comprising a material removal socket (84) removably coupled proximate the base portion (60), the material removal socket (84) configured to magnetically engage a bolt (86).

11. A remote turbine replacement apparatus of any preceding claim, comprising an installation socket (90) removably coupled proximate the base portion (60), the installation socket (90) comprising an alignment profile corresponding to a head portion (95) of a bolt (86) and at least one lever (93) configured to flatten a plurality of locking tabs (94) of a locking tab washer (87) into engagement with the head portion of the bolt (86) upon rotation of the installation socket (90).

12. A method (100) of remotely replacing a turbine component from a turbine assembly comprising:
extending (102) an arm of a remote turbine component replacement apparatus to a remote location of the turbine assembly in close proximity with a turbine component;
removing (104) material from a material removal zone with a material removal tool located proximate a base portion of the remote turbine component replacement apparatus, the base portion configured to be engaged with the turbine component at the remote location of the turbine assembly; and
removing (106) debris generated during removal of material with a debris removal component located proximate the base portion.

13. The method of claim 12, wherein removing (104) material comprises destroying a mechanical fastener, wherein, preferably, the mechanical fastener engages a transition piece to a turbine section component via an aft mount bracket of the transition piece.

14. The method of claim 12 or claim 13, wherein:
extending (102) the arm to the remote location comprises extending the base portion to an internal location of an outer casing to a location proximate an aft region of a transition piece, and/or further comprising:
visually monitoring a viewing region proximate the remote location with a borescope disposed proximate the base portion of the remote turbine component replacement apparatus.

15. The method of claim 12, 13 or 14, further comprising:
coupling a material removal socket proximate the base portion;
magnetically attaching a bolt to the material removal socket;
locating the bolt within a hole;
torqueing the bolt into engagement with the hole to secure the turbine component to the turbine assembly;
remove the material removal socket;
couple an installation socket to proximate the base portion;
aligning an alignment profile of the installation socket to a corresponding geometry of a head portion of the bolt;
rotating the installation socket to engage a plurality of locking tabs of a locking tab washer; and
flattening the plurality of locking tabs upon engagement of the plurality of the locking tabs with at least one lever protruding from the installation socket, wherein flattening the plurality of locking tabs provides a retention force on the head portion of the bolt.
